# EUROPÄISCHE PATENTSCHRIFT

(11) **EP 3 969 257 B1**
(45) Veröffentlichungstag und Bekanntmachung des Hinweises auf die Patenterteilung: **28.08.2024**
(21) Anmeldenummer: 20712920.6
(22) Anmeldetag: 18.03.2020
(51) Int. Cl.: B29C 55/12, B29C 55/20

(54) **RÜCKSCHRUMPF UND KETTENSPANNER EINER FOLIENRECKANLAGE MIT LÄNGSSCHRUMPF**
SHRINKAGE AND CHAIN TENSIONER OF A FILM STRETCHING SYSTEM WITH LONGITUDINAL SHRINKAGE
RETRAIT DE RETOUR ET TENDEUR DE CHAÎNE D'UNE INSTALLATION D'ÉTIRAGE DE FILM COMPORTANT UN RETRAIT LONGITUDINAL

(30) Priorität: 17.05.2019 DE 102019207261
(43) Veröffentlichungstag der Anmeldung: 23.03.2022
(73) Patentinhaber: Lindauer Dornier Gesellschaft mit beschränkter Haftung, 88131 Lindau (DE)
(72) Erfinder: VEIL, Martin, 88131 Lindau (DE); KEIB, Robert, 88353 Kisslegg (DE)
(86) Internationale Anmeldenummer: PCT/EP2020/057500
(87) Internationale Veröffentlichungsnummer: WO 2020/233865

(56) Entgegenhaltungen:
- DE-C1- 3 503 909
- GB-A- 1 442 113

## Beschreibung

Die Erfindung betrifft eine Folienreckanlage mit zwei jeweils durch einen Reckbereich und einen Rückführbereich umlaufenden Kluppenketten.

Aus DE 35 03 909 C1 ist eine Simultanbiaxialreckmaschine für thermoplastische Folienbahnen mit gekoppelten Kluppen zum Einspannen der Ränder der Folienbahn bekannt. Die Kluppen werden in komprimiertem Zustand und in dichter Packung in einem Umlenkbogen vorgehalten und so einer Öffnungsvorrichtung für die Spannhebel der Kluppen zugeführt, so dass sie die Folienbahn am Rande fassen können. Am Ende einer Rücklaufstrecke, in welcher die Kluppenkette auf die größte Länge expandiert ist, laufen die Kluppen auf eine Steuerschiene auf, welche als Rampe ausgebildet ist, so dass sie dem Umlenkbogen in komprimiertem Zustand zugeführt werden können. Die Steuerschiene ist im vorderen Bereich nachgiebig bzw. verstellbar, um dadurch Änderungen des Längsreckverhältnisses und sonstige Längenänderungen der Maschine auszugleichen.

Ferner ist aus DE 37 41 582 A1 eine Vorrichtung zum simultanen, biaxialen Recken einer Folienbahn mit einer Scherengliederkette bekannt. Im Rücklaufbereich zwischen dem Auslaufbereich und der Aufraffzone ist ein Kettenspanner vorgesehen. Der Kettenspanner besteht aus einer gebogenen Stahlfeder, die nach außen vorgespannt ist. Dieser nach Art einer Biegefeder ausgestaltete Kettenspanner soll möglichst sinusförmig ausgebildet sein, so dass ein weicher Anlauf der Führungsrollen erfolgt.

FR 2 922 810 A1 zeigt eine Vorrichtung zum Recken einer aus Kunststoff hergestellten Folie in Längsrichtung nach dem Recken in Querrichtung. Die Querreckvorrichtung weist eine erste und eine zweiten Endloskette auf, die von Kettenrädern angetrieben werden und an denen jeweils Greifer montiert sind. Die Greifer werden kontinuierlich und auf einer geschlossenen Bahn angetrieben. Die Längsreckanlage weist zwei symmetrisch zu einer Mittelebene angeordnete Endlosketten auf. Um den Längsstreckvorgang durchzuführen, ist der Abstand zwischen zwei aufeinanderfolgenden Greifvorrichtungen der Endloskette von einem Mindestwert zu einem Höchstwert einstellbar.

GB 1 442 113 A beschreibt eine Vorrichtung und ein Verfahren zum Recken eines sich bewegenden bahnförmigen Materials, insbesondere eines Kunststoffmaterials wie beispielsweise Polyethylen und Polypropylen. Die bekannte Folienreckanlage weist zwei jeweils durch einen Reckbereich und einen Rückführbereich umlaufende Kluppenketten auf. Bei dieser bekannten Folienreckanlage wird eine am Einlaufkettenrad vorhandene, vollkommen gestreckte Kette im Vorwärmbereich bezüglich der Kettenglieder gestaucht, im eigentlichen Längsreckbereich im Sinne eines definierten Längsreckverhältnisses gestreckt. Bei dieser bekannten Folienreckanlage sind weder ein einstellbarer Längsschrumpf im Reckbereich noch in deren gesamten Rückführbereich beschrieben.

DE 1 504 823 A1 offenbart eine Streckvorrichtung für thermoplastische Filme zum gleichzeitigen Recken sowohl in Längs- als auch in Querrichtung. Die beiden Endlosketten weisen mehrere Glieder mit einem einstellbaren Abstand auf. Die Reckvorrichtung umfasst eine Führungsvorrichtung, um die Gliederreihe der Kette in einer schräg nach auswärts geneigten Richtung bezogen auf die Vorschubrichtung des Films zu führen, wobei die Abstände zwischen den einzelnen Kupplungsstellen der Glieder mit der Vorschubrichtung des Films stetig zunehmen. Diese Führungsvorrichtung enthält zweckmäßigerweise zwei Führungsschienen, die unter einer Neigung gegeneinander befestigt sind. Durch Veränderung der relativen Neigung der Führungsschiene zueinander lässt sich die Längsstreckung des Films selbst im Betrieb verändern.

Die Aufgabe der vorliegenden Erfindung besteht darin, eine einfache Vorrichtung mit einer Einstellung der Kettenspannung bereitzustellen, welche insbesondere auch sich ändernde Reckeinstellungen ausgleichen kann.

Die Aufgabe wird durch den Gegenstand der unabhängigen Ansprüche gelöst. Bevorzugte Ausführungsformen der erfindungsgemäßen Folienreckanlage ergeben sich aus den jeweiligen Unteransprüchen.

Eine erfindungsgemäße Folienreckanlage umfasst in einem ersten Aspekt zwei jeweils durch einen Reckbereich und einen Rückführbereich umlaufende Kluppenketten, welche über eine Auslenkung einer ersten und einer zweiten Steuerschiene einstellbar sind. Die erste Steuerschiene ist für einen Längsschrumpf im Reckbereich und die zweite Steuerschiene für einen Rückschrumpf im Rückführbereich angeordnet. Die Auslenkung der zweiten Steuerschiene ist an zumindest zwei Auslenklagern gemeinsam über eine Verstelleinrichtung mit einem einzigen Antrieb verstellbar.

Die beiden umlaufenden Kluppenketten sind üblicherweise symmetrisch zu einer Längsachse, entlang welcher eine Folienbahn transportiert wird, ausgebildet. Kluppen der umlaufenden Kluppenkette erfassen die Folienbahn am Beginn des Reckbereichs. Entlang des Reckbereichs wird die Folie in zumindest einer Hauptrichtung, d.h. längs oder quer, gereckt. Bei einem Reckvorgang entlang der beiden Hauptrichtungen können die einzelnen Reckvorgänge simultan oder sequenziell erfolgen. Am Ende des Reckbereichs geben die Kluppen die Folienbahn frei und laufen über den Rückführbereich zurück zum Einlauf des Reckbereichs.

Die Bahn der Kluppen und der Kluppenkette wird üblicherweise durch Führungsschienen definiert. Die Kluppen, die an den Kettengliedern befestigt sind, werden von der Führungsschiene geführt. Beispielsweise ist an einer Kluppe eine Lagerung mit mehreren Rollen vorgesehen, welche in die Führungsschiene eingreift und so entlang der Führungsschiene geführt wird. In der Regel ist an jedem zweiten Kettenglied eine derartige Lagerung vorgesehen. Im Betrieb wird die Kluppenkette unter Spannung gehalten, sodass die einzelnen Kettenglieder in einer Grundstellung fluchten. Die Kluppenkette weist weiterhin häufig obere und untere Zapfen bzw. obere und untere Rollen auf, welchen an den Kettengliedern angebracht sind, die keine Kluppe aufweisen. Die Steuerschiene greift in die Rollen ein, um den Abstand der einzelnen Kluppen zu verkürzen. Dazu werden einzelne Kettenglieder bzw. Stege quer zur Kettenbewegungsrichtung verschoben und die Kette wird in eine Zick-Zack-Form gebracht. Hierzu weist die Steuerschiene häufig eine obere und eine untere Steuerschiene auf, welche mit dem entsprechenden Zapfen bzw. der entsprechenden Rolle in Eingriff gebracht werden.

Die erfindungsgemäße zweite Steuerschiene weist vorzugsweise zumindest zwei Steuerschienenelemente auf, welche in Umlaufrichtung hintereinander oder bereichsweise überlappend angeordnet sind. Hierzu sind die Steuerschienenelemente an ihren Enden vorzugsweise kammartig ausgebildet und greifen ineinander ein, um einen sanften Übergang für die Zapfen bzw. Rollen bereitzustellen. Die zumindest zwei Steuerschienenelemente können dabei jeweils obere und untere Steuerschienen aufweisen. In der Regel weist die Steuerschiene in Umlaufrichtung ein sogenanntes Auflaufelement auf, welches als Rampe dient, mittels welcher Rampe die Zapfen oder Rollen der Kluppenkette ausgelenkt werden. Dieses Auflaufelement wird in der Regel nicht aktiv ausgelenkt, sondern häufig (passiv) über eine Verbindung beispielsweise über einen Drehbolzen, mit dem darauffolgenden Steuerschienenelement verbunden und mit diesem mitbewegt. Nach dem in Umlaufrichtung letzten Steuerschienenelement im Rückführbereich ist häufig ebenfalls ein als negative Rampe ausgebildetes Auslaufelement angeordnet, so dass über dieses die Auslenkung der Kluppenkette zurückgefahren wird und die Kluppenkette maximal gelängt wird. Auch das Auslaufelement wird häufig passiv über das letzte Steuerschienenelement mitbewegt. Zum Ausgleich von Schwingungen oder kurzzeitigen Kettenlängenänderungen kann das Auslaufelement federnd gelagert sein.

Die Verstelleinrichtung weist vorzugsweise Hebel auf, welche ebenfalls im Kettenbahnträger gelagert sind. Ein erstes Ende der Hebel ist jeweils mit einem der Auslenklager der zweiten Steuerschiene verbunden. Das dem ersten Ende gegenüberliegende zweite Ende ist mit einer Schubstange verbunden. Die Schubstange verläuft bevorzugt entlang des Kettenbahnträgers im Wesentlichen parallel zur Bewegungsrichtung der Kluppenkette. Durch eine Längsverschiebung der Schubstange wird der im Kettenbahnträger gelagerte Hebel rotiert und überträgt die Bewegung auf die zweite Steuerschiene, so dass deren Auslenkung verändert wird. Somit wird vorzugsweise die Bewegung der Schubstange über den Hebel um 90 Grad in eine Auslenkbewegung der zweiten Steuerschiene, rechtwinklig zur Bewegungsbahn der Kluppenkette, umgelenkt.

Die Schubstange wird vorzugsweise über eine Spindel bewegt bzw. angetrieben, und weiter vorzugsweise wird die Spindel von einem Elektromotor gedreht bzw. angetrieben. Zwischen dem Elektromotor und der Spindel ist häufig ein Getriebe angeordnet, um die Drehzahl und das Drehmoment zu übersetzen. Alternativ kann als Antrieb der Schubstange auch beispielsweise ein Hydraulikzylinder oder ein Linearantrieb verwendet werden, um so eine translatorische Bewegung zu erzeugen.

Die Spindel ist vorzugsweise an beiden Enden jeweils mit einer Schubstange verbunden. Vorzugsweise gleichen sich dabei die inneren Schubkräfte auf die Spindel weitestgehend aus. Dies kann beispielsweise dadurch erreicht werden, dass die Schubstangen in entgegengesetzte Richtungen zueinander bewegt werden und auch die Hebel symmetrisch zur Spindel angeordnet sind. Die zweite Steuerschiene ist in Längsrichtung vorzugsweise symmetrisch zum Motor ausgebildet, d.h. die Länge, die Anzahl der Auslenklager und der Hebel sind identisch.

Die Spindel ist vorzugsweise als durchgehende Spindel ausgebildet, d.h. die beiden Enden sind mit der Schubstange verbunden, und mittig ist auf der Spindel ein Antrieb, insbesondere ein Elektromotor, angeordnet. Die Spindel kann dabei dreigeteilt ausgebildet sein, d.h. die beiden Enden weisen ein Spindelprofil auf, und der mittlere Abschnitt ist als Welle ausgebildet und weist ggf. ein Antriebszahnrad auf. In das Antriebszahnrad greift der Elektromotor oder ein Zwischengetriebe zwischen Motor und Spindel ein. Die Spindel kann dabei einstückig ausgebildet sein oder aus einzelnen Wellenabschnitten zusammengesetzt sein, welche beispielsweise miteinander verklebt und/oder verstiftet sind.

Der Antrieb ist vorzugsweise beweglich gelagert, insbesondere in einer Querrichtung orthogonal zur Schubstangen- bzw. Spindel-Längsrichtung. Diese Richtung entspricht auch im Wesentlichen der Kluppenkettenlängsrichtung. Durch die Übertragung der Bewegung der Schubstange auf die zweite Steuerschiene mittels eines Drehhebels umfasst eine Translation der Schubstange auch eine Bewegung in Querrichtung. Um diese Querbewegung aufzufangen und Spannungen innerhalb des Systems zu vermeiden, ist der Antrieb, insbesondere der Elektromotor mit Spindel, ebenfalls in Querrichtung beweglich gelagert. Eine solche Lagerung kann beispielsweise über eine Linearführung realisiert werden.

Der Hebel ist vorzugsweise als exzentrischer Kipphebel ausgebildet. Unter exzentrischer Kipphebel wird insbesondere verstanden, dass das Drehlager nicht auf der Verbindungslinie zwischen dem Auslenklager und dem Schublager, an welchem der Hebel mit der Schubstange verbunden ist, angeordnet ist. Vielmehr ist der Drehpunkt zwischen den beiden Lagern, jedoch beabstandet von der direkten Verbindungslinie, angeordnet. Für eine Verstellung der Steuerschiene von einer minimalen Auslenkung auf eine maximale Auslenkung wird bevorzugt der Totpunkt auf der Schubstangenseite überschritten, d.h. der Punkt, an welchem das Schubstangenlager des Hebels den maximalen Abstand vom Kettenbahnträger aufweist bzw. die Verbindungslinie zwischen Drehlager und Schublager orthogonal zur Schubstangenlängsrichtung angeordnet ist. Die maximale Bewegung des Steuerhebels von einer minimalen Auslenkung zu einer maximalen Auslenkung der zweiten Steuerschiene ist vorzugsweise symmetrisch zum Totpunkt ausgebildet. Weiter vorzugsweise ist der exzentrische Kipphebel derart ausgebildet, dass die von der Schubstange eingebrachte Kraft progressiv auf die in das Auslenklager für den Rückschrumpf aufgebrachte Kraft übersetzt ist. Vorzugsweise ist die Kraft derart übersetzt, dass die von der Schubstange eingebrachte Kraft im Wesentlichen proportional zur Translation bzw. zur Auslenkung ist, wohingegen die Auslenkkraft auf das Auslenklager exponentiell ansteigt. Durch die Geometrie der Kluppenkette und die Auslenkung in eine Zick-Zack-Form wird mit zunehmender Auslenkung die Auslenkkraft systembedingt exponentiell größer. Durch eine entsprechende Übersetzung kann erreicht werden, dass die aufzubringende Kraft sich auf die Schubstange jedoch proportional zum Translationsweg verhält.

Jedes Steuerschienenelement weist vorzugsweise zwei Auslenklager auf, welche von den Enden der Steuerschienenelemente beabstandet angeordnet sind. Durch die Anordnung der Auslenklager, beabstandet von den Enden der Steuerschienenelemente, kann die Durchbiegung der einzelnen Steuerschienenelemente durch die Kraft aus der Kluppenkette reduziert werden. Die Auslenklager sind an beliebiger Stelle der zweiten Steuerschiene anbringbar. Vorzugsweise sind diese Auslenklager jedoch im Wesentlichen gleichmäßig über die Gesamtlänge der zweiten Steuerschiene verteilt angeordnet. Dies bewirkt eine gleichmäßige Belastung der einzelnen Lager und eine geringe Durchbiegung der Steuerschienenelemente.

Der Hebel besteht vorzugsweise aus zwei Hebelelementen, insbesondere einem oberen Hebelelement und einem unteren Hebelelement, welche über eine durch den Kettenbahnträger hindurchgehende Lagerung miteinander verbunden sind. Die Auslenklager der Hebel greifen jeweils über einen Gleitstein in die zweite Steuerschiene, insbesondere in die obere und die untere Steuerschiene, ein. In der zweiten Steuerschiene sind hierzu Längsschlitze, d.h. Schlitze in Laufrichtung der Kette, ausgebildet. Dadurch kann eine Auslenkung ohne eine Längsverschiebung der zweiten Steuerschiene erreicht werden. Die Lagerung der zweiten Steuerschiene in Längsrichtung erfolgt in der Regel über eine separate Lagerung, insbesondere ebenfalls über ein Gleitstein-Nut-System.

Die zweite Steuerschiene verläuft in der Regel im Wesentlichen über den gesamten Rückführbereich oder über Teile, insbesondere weite Teile des Rückführbereichs, welcher üblicherweise parallel zum Reckbereich angeordnet ist. Im Rückführbereich ist die Hauptbewegungsrichtung der Kluppen(kette) entgegen der Folienbewegungsrichtung im Reckbereich. Die Kluppenkette wird in der Regel zwischen Reckbereich und Rückführbereich jeweils um 180 Grad umgelenkt, so dass eine geschlossene Kluppenkettenbahn entsteht. Der Vorteil eines einzigen Antriebs für die zweite Steuerschiene besteht darin, dass dieser platz- und kostengünstig an der Innenseite des Kettenbahnträgers angeordnet werden kann. Für den Rückführbereich besteht, anders als im Reckbereich, nicht die Notwendigkeit, jedes Auslenklager, d.h. jedes Steuerschienenelement, separat einzustellen. Vielmehr ist das Integral über der Auslenkung relevant, um so die gesamte Kettenlänge einzustellen. Insbesondere eine Ausbildung der Verstelleinrichtung mit einer Schubstange und einer Kraftübersetzung um 90 Grad mittels Drehhebel erlaubt eine platzsparende Anordnung in der Folienreckanlage, und zwar im Wesentlichen parallel zum Kettenbahnträger des Rückführbereichs. Durch eine derartige Anpassung der Kluppenkettenlänge besteht eine hohe Variabilität im Reckbereich, so dass beispielsweise ein Schrumpf von bis zu 25% frei einstellbar ist (d.h. der Kluppenabstand wird im Schrumpfbereich um bis zu 25% verringert), ohne dass die Folienreckanlage gestoppt werden muss und Kettenglieder entfernt werden müssen.

Die Kluppenkette läuft in der Regel in maximal gelängtem Zustand auf die zweite Steuerschiene auf und verlässt diese auch wieder in maximal gelängtem Zustand. Hierzu wird in der Regel eine positive Rampe am Anfang, insbesondere ein sogenanntes Auflaufelement, und eine negative Rampe am Ende, ein sogenanntes Auslaufelement, verwendet. Dazwischen können ein oder mehrere Steuerschienenelemente angeordnet sein. In einer kurzen Ausführung der zweiten Steuerschiene weist diese lediglich ein Steuerschienenelement, welches an zwei Auslenklagern über einen einzigen Motor verstellbar ist, sowie gegebenenfalls ein Auflaufelement und/oder ein Auslaufelement auf. Somit wird das eine Steuerschienenelement an zwei Auslenklagern von einem Antrieb verstellt. Bei längeren Steuerschienen werden diese häufig in mehrere Steuerschienenelementen unterteilt und bei langen Steuerschienenelementen besteht darüber hinaus die Möglichkeit, ein Steuerschienenelement mit mehr als zwei Auslenklagern zu versehen. Zwischen dem Auf- und Auslaufelement weist die zweite Steuerschiene vorzugsweise eine über die Länge der Steuerschiene konstante Auslenkung auf. Die Auslenkung ist jedoch über die Verstelleinrichtung mit einem einzigen Antrieb in einfacher Art und Weise kontinuierlich veränderbar. Wie die kontinuierliche Veränderbarkeit der Auslenkung ist somit auch die Kluppenkettenlänge kontinuierlich von einem Maximalwert bei minimaler Auslenkung der Steuerschiene zu einem Minimalwert bei maximaler Auslenkung der zweiten Steuerschiene einstellbar. Vom Erfindungsgedanken soll ferner umfasst sein, dass der Rückführbereich mehr als eine zweite Steuerschiene aufweist. Durch die Längenveränderung der Kluppenkette ist eine erhöhte Variabilität beim Betreiben der Folienreckanlage, insbesondere die Variabilität bezüglich der Einstellung des Kluppenabstandes im Reckbereich, in einfacher Art und Weise bereitgestellt.

Die erfindungsgemäße Folienreckanlage umfasst in einem zweiten Aspekt der Erfindung zwei jeweils durch einen Reckbereich und einen Rückführbereich umlaufende Kluppenketten, bei welchen über eine Auslenkung einer ersten Steuerschiene ein Längsschrumpf im Reckbereich einstellbar ist, wobei zwischen dem Reckbereich und dem Rückführbereich für jede Kluppenkette ein Antriebskettenrad und nachfolgend ein Kettenspanner angeordnet sind. Vorzugsweise ist im Rückführbereich die zweite Steuerschiene angeordnet.

Im Stand der Technik ist der Kettenspanner häufig im Bereich des Einlaufs in den Reckbereich auf dem Einlassständer angeordnet. Dies hat jedoch den Nachteil, dass der Kettenspanner, um die Kettenspannkraft aufzubringen, auch die Trägheit und die Reibkraft in der Kette zwischen dem Antrieb und dem Kettenspanner überwinden muss. Zudem wird durch die erfindungsgemäße Anordnung die Konstruktion dadurch vereinfacht, dass auf dem Einlassständer kein Kreuzschlitten mehr notwendig ist, über welchen der Abstand der Ketten zueinander, d.h. die Folienbahnbreite, einstellbar ist und darüber hinaus die Kettenspannung ermöglicht wird. Durch den Verzicht auf einen Kreuzschlitten auf dem Einlassständer besteht auch der Vorteil, dass der Einklupp-Punkt konstant ist und nicht in z-Richtung, d.h. in Bewegungsrichtung der Folienbahn, aufgrund des Kettenspanners wandert.

Der Kettenspanner ist vorzugsweise unmittelbar nach dem Antriebskettenrad angeordnet. Häufig lenkt das Antriebskettenrad die Kette um etwa 90 Grad und der nachfolgend angeordnete Kettenspanner ebenfalls um einen Winkelbereich von 70 bis 110 Grad, vorzugsweise ebenfalls um etwa 90 Grad, um. Das Antriebskettenrad und der Kettenspanner sind bevorzugt auf einem Auslassständer montiert. Eine Kettenführung des Kettenspanners, welche insbesondere eine Führungsschiene für die Kluppen aufweist, ist beweglich auf dem Auslassständer montiert. Die Kettenführung bzw. die Kettenumlenkung ist vorzugsweise quer zur Kettenlaufrichtung verschiebbar. Bevorzugt verläuft die Bewegungsrichtung in x-Richtung, d.h. orthogonal zur Bewegungsrichtung der Folie. Durch eine Bewegung der Kettenführung wird die Länge der Führungsbahn bzw. des Umlaufwegs der Kluppenkette verändert, so dass diese dadurch gespannt wird. Durch den Kettenspanner wird die Kettenlänge im Wesentlichen nicht verändert.

Die Kettenspannkraft wird vorzugsweise über einen kraftbetätigten Antrieb, insbesondere einen Pneumatikzylinder auf die Kettenführung aufgebracht. Somit ist die Kettenführung über einen kraftbetätigten Antrieb verschiebbar. Alternativ kann anstatt eines Pneumatikzylinders auch ein Linear-Motor oder ein hydraulischer Antrieb zur Spannung der Kluppenkette eingesetzt werden. Vorzugsweise umfasst die Folienreckanlage eine Steuereinrichtung bzw. eine Steuerung, welche die Verstellung der Steuerschienen, insbesondere der ersten und/oder zweiten Steuerschiene, in Abhängigkeit von der Auslenkung des Kettenspanners verändert. Zudem kann über die Steuereinrichtung der Antrieb des Kettenspanners, d.h. der Spannreaktor, gesteuert werden. Der Kettenspanner weist einen Arbeitsbereich auf, welcher maßgeblich vom maximalen Arbeitsweg des kraftbetätigten Antriebs, beispielsweise des Pneumatikzylinders, abhängig ist. Der Arbeitsbereich umfasst beispielsweise einen Verstellweg von 300 mm, wobei bevorzugt eine mittige Nulllage vorgesehen ist, so dass ein Verstellweg von ± 150 mm um die Nulllage bereitgestellt wird. Innerhalb des Arbeitsbereichs ist zumindest ein Schwellwert definiert, welcher beispielsweise bei ± 60 mm liegt. Bei Erreichen des ersten Grenzwerts bzw. der ersten Grenzwerte im Arbeitsbereich wird die Auslenkung der zweiten Steuerschiene im Rückführbereich derart verstellt, dass der Kettenspanner in einen vordefinierten Sollbereich innerhalb des Arbeitsbereichs zurückkehrt. Insbesondere kehrt der Kettenspanner in seine Nulllage zurück. Der Arbeitsbereich innerhalb der ersten Grenzwerte ist in der Regel ausreichend, um die üblichen Längenänderungen im Betrieb der Folienreckanlage auszugleichen. Schwankungen der Kettenlänge können, beispielsweise aus dem Verschleiß oder Temperaturänderungen, zum Beispiel beim Aufheizen des Ofens, resultieren.

Weiter vorzugsweise ist ein zweiter Grenzwert bzw. sind zweite Grenzwerte definiert. Die zweiten Grenzwerte sind insbesondere bei ± 100 mm definiert. Bei Erreichen bzw. Überschreiten der vordefinierten zweiten Grenzwerte wird eine Verstellung der Auslenkung der ersten Steuerschiene gestoppt, d.h. eine Änderung in den Reckparametern wird gestoppt, bis sich der Kettenspanner wieder innerhalb der ersten Grenzwerte oder in der Neutralstellung befindet.

Bei Erreichen der Grenzen des Arbeitsbereichs, d.h. insbesondere des maximalen Arbeitsbereichs, wird vorzugsweise die Folienreckanlage gestoppt. Hierzu wird insbesondere das Kettenantriebsrad sowie die Verstellung der ersten bzw. zweiten Steuerschiene gestoppt. Gegebenenfalls erfolgt eine Signalausgabe, beispielsweise auf einem Display, welche den Bediener auffordert, Kettenglieder ein- bzw. auszubauen.

Sofern die Kette geöffnet werden soll, um Kettenglieder ein- bzw. auszubauen, gibt die Steuereinrichtung vorzugsweise das Signal ab, dass der Kettenspanner in seine Nullstellung verfährt, der Schrumpf auf 20% eingestellt wird, d.h. die erste Steuerschiene derart ausgelenkt ist, dass der Kluppenabstand am Ende des Schrumpfbereichs im Vergleich zum Beginn des Schrumpfbereichs um 20% reduziert ist und der Rückschrumpf auf 0% eingestellt ist, d.h. die zweite Steuerschiene nicht ausgelenkt ist.

Durch die Verwendung eines Kettenspanners mit einem kraftbetätigten Ausgleichselement wird erreicht, dass die Reckparameter, insbesondere auch die Schrumpfparameter im Reckbereich während des Betriebs kontinuierlich veränderbar sind, d.h. ohne die Folienreckanlage samt der Kluppenkette anzuhalten. Der Kettenspanner dient dabei insbesondere als Ausgleichselement, um die Trägheit der zweiten Steuerschiene in dem Maß auszugleichen, in dem sie einer Verstellung der ersten Steuerschiene nacheilt. Darüber hinaus gleicht der Kettenspanner Längenänderungen beispielsweise aus Verschleiß oder aus Temperaturschwankungen, zum Beispiel beim Aufheizen des Ofens, aus. Diese Funktion wird auch bereitgestellt ohne das Vorhandensein bzw. die Verstellbarkeit der zweiten Steuerschiene.

Bevorzugte Ausführungsformen und Details der vorliegenden Erfindung werden im Folgenden anhand der Figuren beschrieben. Dabei zeigen:
- Figur 1:: eine Prinzipdarstellung in Draufsicht auf eine Kluppenkette einer Folienreckanlage mit Reckbereich und Rückführbereich;
- Figur 2:: eine Draufsicht auf einen Abschnitt des Rückführbereichs mit zweiter Steuerschiene und Verstelleinrichtung;

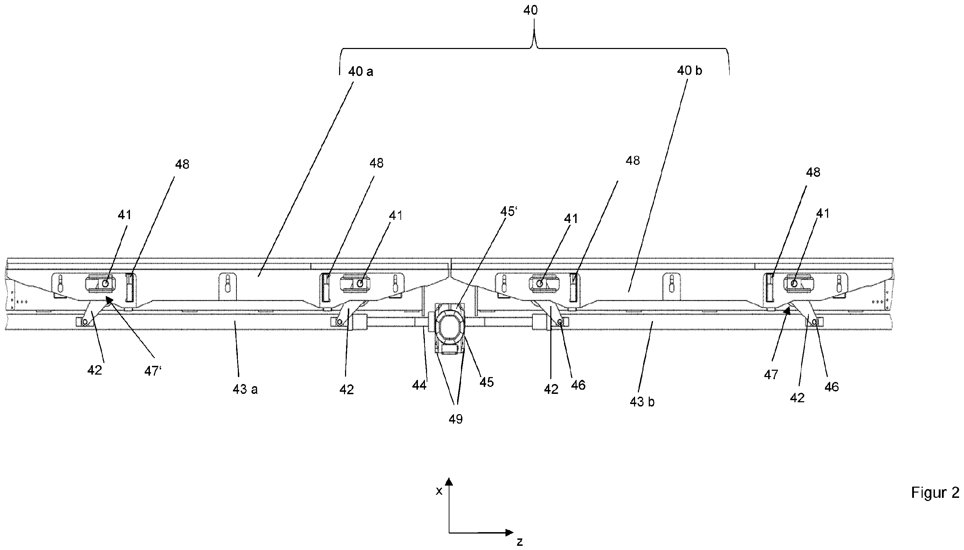

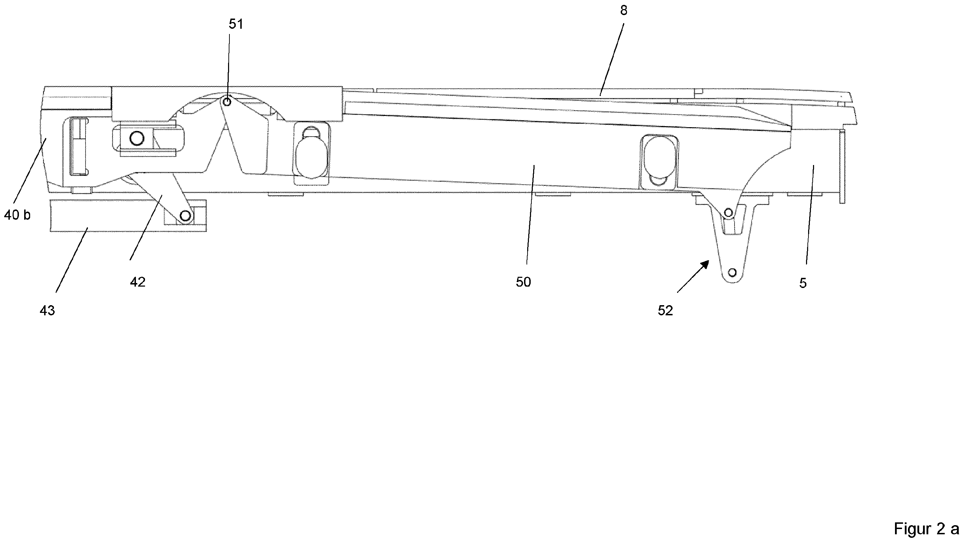

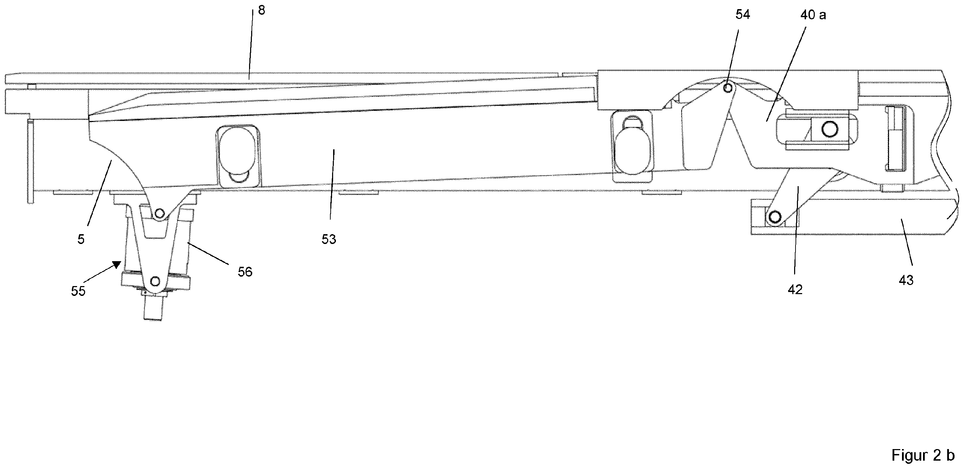

- Figur 2 a:: eine Draufsicht auf ein Auflaufelement der zweiten Steuerschiene;
- Figur 2 b:: eine Draufsicht auf ein Auslaufelement der zweiten Steuerschiene;

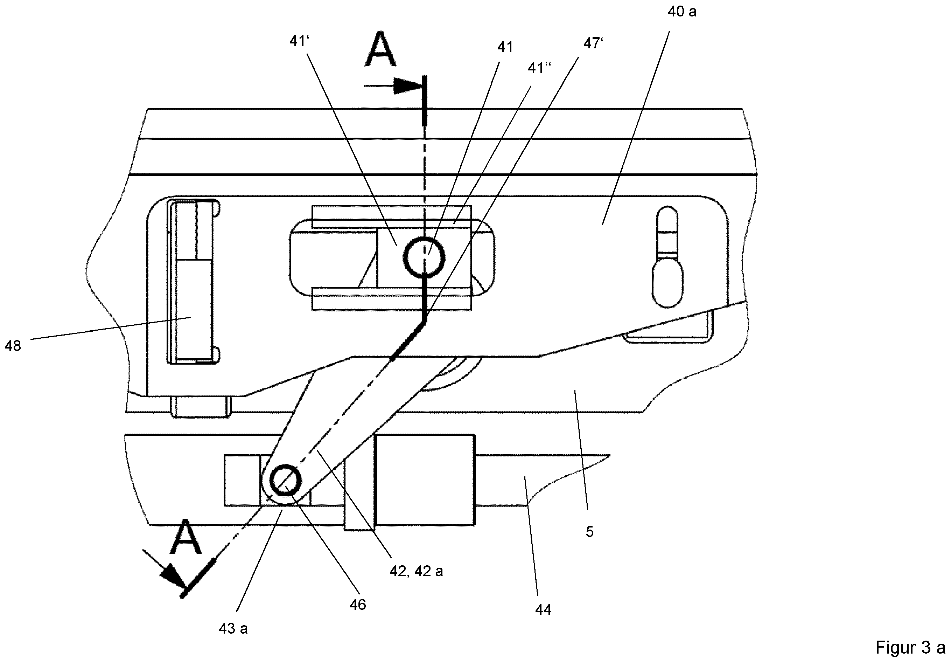

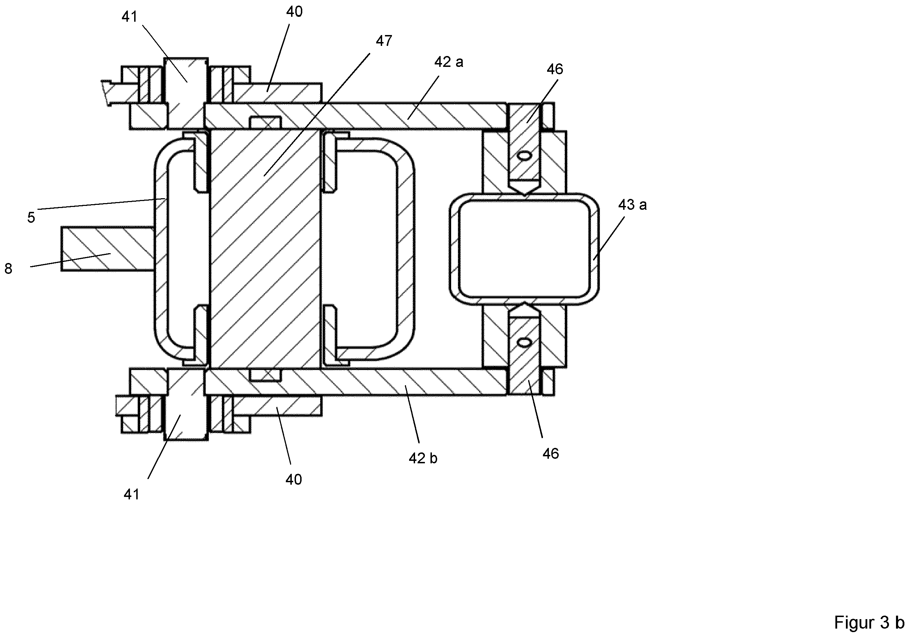

- Figur 3 a:: einen Hebel einer Verstelleinrichtung für eine Steuerschiene;
- Figur 3 b:: eine Schnittdarstellung entlang der Ebene A - A durch den Hebel;

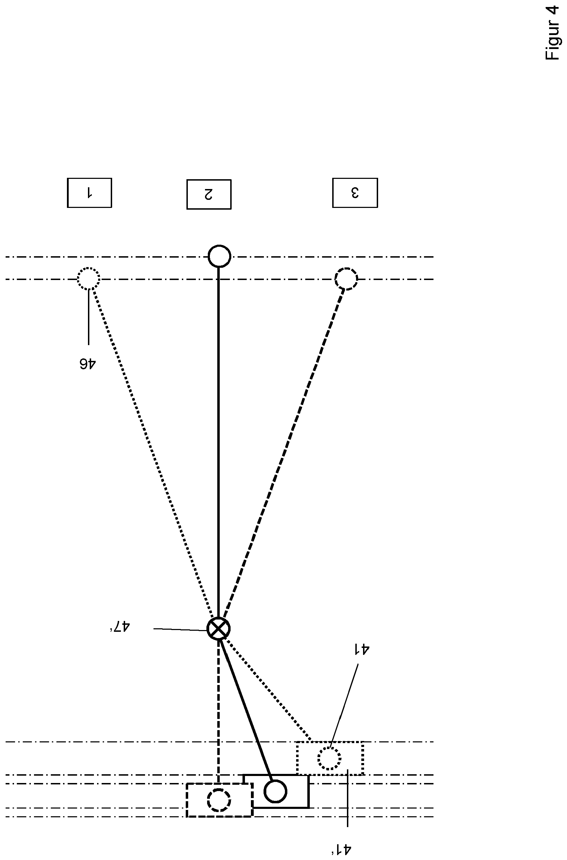

- Figur 4:: eine Prinzipdarstellung einer Kinematik des Hebels;

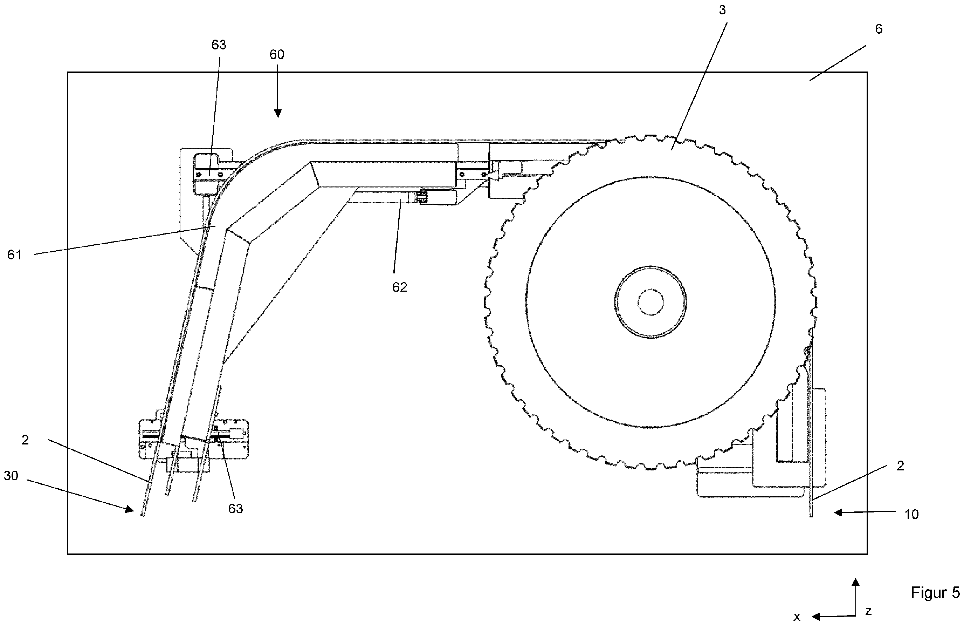

- Figur 5:: eine Draufsicht auf den Kettenspanner; und

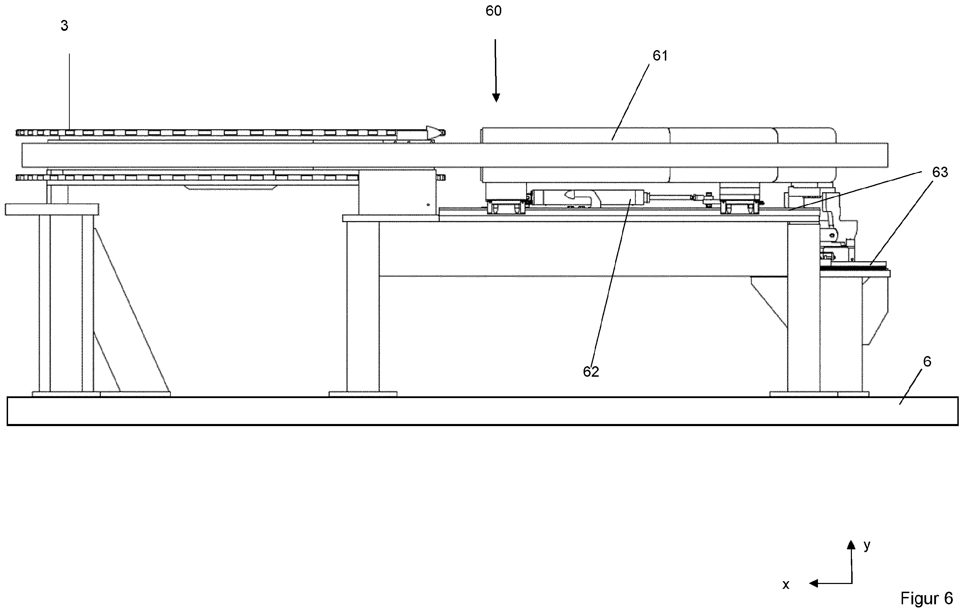

- Figur 6:: eine Seitenansicht des Kettenspanners.

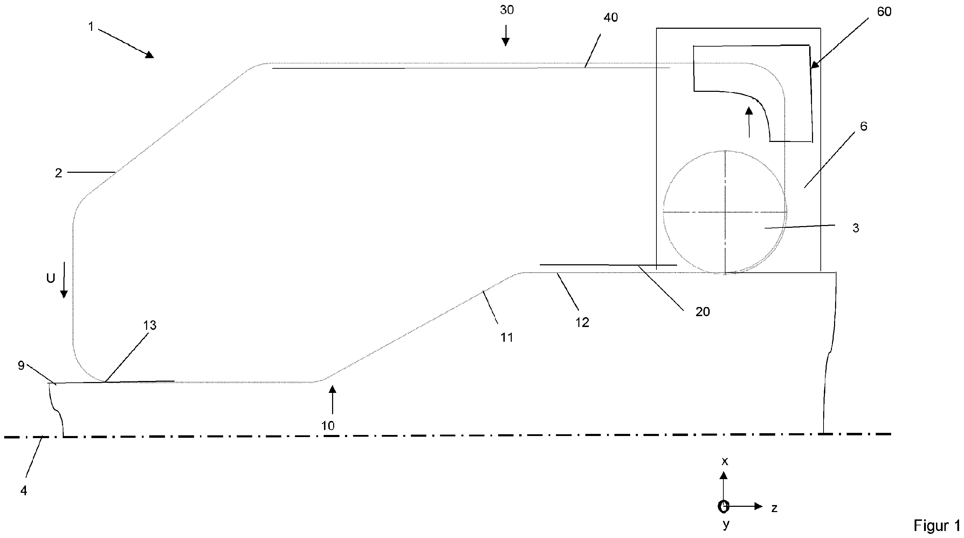

In Figur 1 ist eine Prinzipdarstellung in Draufsicht auf eine Kluppenkette 2 einer Folienreckanlage 1 dargestellt. Die Kluppenkette 2 ist als umlaufende Endloskette ausgebildet und durchläuft im Betrieb einen Reckbereich 10 und einen Rückführbereich 30 in Umlaufrichtung U. Die Folienreckanlage 1 ist in der Regel symmetrisch zu einer Mittelachse 4 aufgebaut und umfasst eine spiegelbildlich angeordnete zweite Kluppenkette, welche nicht dargestellt ist. Die Folie 9 wird am Einlauf des Reckbereichs 13 von Kluppen der Kluppenkette 2 erfasst und durch den Reckbereich 10 transportiert. Die Folie 9 durchläuft zunächst einen Querreckbereich 11 und anschließend einen Längsschrumpfbereich 12. Im Längsschrumpfbereich 12 ist der Längsschrumpf über eine erste Steuerschiene 20 einstellbar. Durch die erste Steuerschiene 20 ist der Abstand der einzelnen Kluppen zueinander im Längsschrumpfbereich 12 verringerbar und einstellbar. Zusätzlich kann im Längsschrumpfbereich auch ein Querschrumpfen erfolgen. Dies wird in der Regel dadurch realisiert, dass die beiden spiegelbildlich angeordneten Kluppenketten 2 im Längsschrumpfbereich 12 trapezförmig aufeinander zulaufen und nicht parallel zueinander angeordnet sind. Vorzugsweise ist der Querschrumpf ebenfalls einstellbar. Am Ende des Reckbereichs 10 ist ein Antriebskettenrad 3 angeordnet. Das Antriebskettenrad 3 greift in die Kluppenkette 2 ein und treibt diese an. Vorzugsweise wird das Antriebskettenrad 3 von einem Elektromotor angetrieben. Das Antriebskettenrad 3 sowie der Elektromotor sind vorzugsweise auf einem Auslassständer 6 angeordnet. Unmittelbar nach dem Antriebskettenrad ist ein Kettenspanner 60 angeordnet. Der Kettenspanner 60 ist bevorzugt ebenfalls auf dem Auslassständer 6 befestigt. In der hier gezeigten Ausführungsform weist der Kettenspanner 60 eine Spannrichtung in x-Richtung auf. Die Spannrichtung kann jedoch ebenfalls in y-Richtung oder einer kombinierten x-y-Richtung ausgebildet sein. Zwischen dem Kettenspanner 60 und dem Einlauf des Reckbereichs 13 ist ein Rückführbereich 30 angeordnet. Im Rückführbereich 30 ist eine zweite Steuerschiene 40 angeordnet. Durch die zweite Steuerschiene 40 im Rückführbereich 30 ist ein Rückschrumpf im Rückführbereich einstellbar. Der Rückschrumpf, d.h. der Abstand der Kluppen im Rückführbereich, wird in der Regel entsprechend der Schrumpfeinstellung im Reckbereich 10 eingestellt und an diesen angepasst.

In Figur 2 ist eine zweite Steuerschiene 40 gezeigt, welche im Rückführbereich 30 angeordnet ist. Der gezeigte Abschnitt der zweiten Steuerschiene 40 weist zwei Steuerschienenelemente 40 a und 40 b auf. Die zweite Steuerschiene 40 kann jedoch weitere Steuerschienenelemente aufweisen, welche die zweite Steuerschiene 40 verlängern, jedoch hier nicht gezeigt sind. Die zweite Steuerschiene kann auch lediglich ein Steuerschienenelement aufweisen. Die beiden Steuerschienenelemente 40 a, b sind jeweils über ein Auslenklager 41 mit Hebeln 42 verbunden bzw. verschweißt. Ein Hebel 42 ist im Kettenbahnträger 5 in einem Drehlager 47 gelagert. Über eine Verdrehung der Hebel 42 um eine Drehachse 47` des Drehlagers 47 ist die Auslenkung der Steuerschienenelemente 40 a, b und somit auch der gesamten zweiten Steuerschiene 40 veränderbar. Durch die Veränderung der Auslenkung der zweiten Steuerschiene 40 wird die Länge in der Kluppenkette 2 verändert. Insbesondere wird die Kluppenkette 2 durch eine Auslenkung der zweiten Steuerschiene 40 aus einer geraden Kette mit einer maximalen Länge in eine Zick-Zack-Form gebracht. Die einzelnen Hebel 42 und somit die gesamte zweite Steuerschiene 40 wird von einem einzigen Antrieb angetrieben. Im Rückführbereich können auch noch zumindest eine weitere zweite Steuerschienen 40 (nicht gezeigt) angeordnet sein, sodass beispielsweise zwei zweite Steuerschienen 40 im Rückführbereich vorhanden sind. Hierzu sind den Auslenklagern im Hebel 42 gegenüberliegende Schublager 46 mit einer Schubstange 43 verbunden. Die einzelnen Hebel 42 sind über die Schubstange 43 verbunden und führen eine gekoppelte Bewegung bzw. Verdrehung aus. Die hier gezeigte Schubstange 43 besteht aus zwei Schubstangen 43 a und 43 b, welche sich von gegenüberliegenden Enden eines Antriebs wegerstrecken. Die beiden Schubstangen 43 a, b verlaufen dabei insbesondere parallel zur zweiten Steuerschiene 40. Der Antrieb besteht aus einem Elektromotor 45 und einem daran angeschlossenen Getriebe in einem Getriebegehäuse 45`, über welches Getriebe eine Spindel 44 angetrieben wird. Die Spindel 44 weist zumindest an den beiden Enden, an welchen sie mit den Schubstangen 43 a, b verbunden ist, ein Spindelprofil auf. Durch Drehen der Spindel lassen sich die Schubstangen 43 a, b entlang ihrer Längsrichtung, welche in der Regel die z-Richtung der Folienreckanlage darstellt, verschieben. In der hier gezeigten Ausführungsform bewirkt eine Drehung der Spindel 44 ein entgegengesetztes Verschieben der Schubstange 43 a zur Schubstange 43 b. Die Hebel sind symmetrisch zur x-y-Ebene durch den Elektromotor 45 angeordnet. Dies hat den Vorteil, dass bei gleicher Länge der Schubstangenelemente bzw. gleicher Anzahl der Steuerschienenelemente auf beiden Seiten des Antriebs die Längskräfte in z-Richtung sich im Wesentlichen ausgleichen.

Der Elektromotor 45 samt Getriebe ist auf einem Schlitten angeordnet, welcher auf Linearführungen 49 gelagert ist. Dadurch ist der Getriebemotor entlang der x-Richtung verschiebbar, so dass ein Ausgleich in diese Richtung erfolgen kann. Die Schublager 46 bewegen sich bei Verdrehung der Hebel 42 um die Drehachse 47` auf einer Kreisbahn. Somit führen die Schubstangen 43 a, b bei Verschiebung entlang der z-Achse eine Zwangsbewegung in x-Richtung aus. Um Verspannungen durch diese Bewegung in x-Richtung zu vermeiden, ist der Antrieb ebenfalls in x-Richtung verschiebbar ausgebildet und kann die Bewegung mitgehen.

Bei herkömmlichen Steuerschienen, welche mehrere Antriebe aufweisen, erfolgt der Antrieb üblicherweise am Übergang von zwei Steuerschienenelementen, da der Antrieb so zwei Steuerschienenelemente gemeinsam verstellen kann und die Anzahl der Antriebe insgesamt reduziert werden kann. Auf Grund der Verwendung eines einzigen Antriebs für die gesamte zweite Steuerschiene 40 erfolgt die Verstellung aller Steuerschienenelemente 40 a, b gemeinsam und vorzugsweise auch gleichmäßig bzw. proportional zueinander. Bevorzugt sind die Auslenklager 41, an welchem die Steuerschienenelemente 40 a, b in x-Richtung abgestützt sind, gleichmäßig über die Länge der Steuerschienenelemente 40 a, b verteilt angeordnet. Die Auslenklager 41 sind hier beabstandet von den Enden der Steuerschienenelemente 40 a, b zur Mitte der Steuerschienenelemente 40 a, b hin versetzt. Dadurch ergibt sich eine gleichmäßigere Biegebelastung, welche von der Kette auf die Steuerschiene 40 aufgebracht wird. In z-Richtung sind die Steuerschienenelemente 40 a, b über jeweils zwei Querführungen 48 gelagert. Die Querführungen 48 bestehen in der vorliegenden Ausführungsform aus einem Schlitz in den Steuerschienenelementen 40 a, b in x-Richtung sowie einem darin laufenden Nutstein, welcher mit dem Kettenbahnträger 5 verschraubt ist. Somit weisen die Steuerschienenelemente 40 a, b eine Trennung der Lagerung in x- und z-Richtung auf.

Figur 2 a zeigt eine Draufsicht auf ein Auflaufelement 50 der zweiten Steuerschiene 40. Das Auflaufelement 50 ist über ein erstes Drehgelenk 51 mit dem Steuerschienenelement 40 b verbunden, welches hier das erste Steuerschienenelement in Kettenlaufrichtung darstellt. Am gegenüberliegenden Ende ist das Auflaufelement 50 mit dem Kettenbahnträger 5 verbunden bzw. beweglich an diesem gelagert. Eine erste Pendellagerung 52 besteht aus zwei parallelen Drehachsen im Auflaufelement 50 und am Kettenbahnträger 5, welche über ein Verbindungselement miteinander verbunden sind. Durch diese Art der Lagerung fungiert das Auflaufelement als Rampe, auf welche die Kluppenkette aufläuft. Durch die Verbindung über das Drehgelenk 51 mit dem Steuerschienenelement 40 b folgt das Auflaufelement 50 der Auslenkung der zweiten Steuerschiene 40, so dass die Rampe an ihrem Ende die Auslenkung der zweiten Steuerschiene 40 aufweist. Am Kettenbahnträger 5 ist eine Führungsschiene 8 befestigt, an welcher über Lager an den Kluppen die Kluppenkette 2 geführt ist.

Figur 2 b zeigt ein Auslaufelement 53 der zweiten Steuerschiene 40. Das Auslaufelement 53 ist an einer ersten Seite über ein zweites Drehgelenk 54 mit dem Steuerschienenelement 40 a verbunden, welches hier das letzte Steuerschienenelement in Umlaufrichtung darstellt. Am gegenüberliegenden Ende ist das Auslaufelement 53 analog Auflaufelement 50 über eine zweite Pendellagerung 55 mit dem Kettenbahnträger 5 verbunden. In Abweichung zum Auflaufelement 50 ist die zweite Pendellagerung 55 gefedert, d.h. zwischen den beiden Drehachsen am Kettenbahnträger 5 und am Auslaufelement 53 ist ein Tellerfederpaket 56 angeordnet, um Schwingungen in der Kette aufzunehmen. Wie in Figur 2 b gezeigt, ist das Auslaufelement 53 als negative Rampe ausgebildet.

Die Figur 3 a zeigt den Hebel 42 in einer Draufsicht zum Ändern der Auslenkung eines Steuerschienenelements 40 a und Figur 3 b zeigt einen Schnitt durch den Hebel 42 entlang der Linie A - A. Der Schnitt verläuft durch das Auslenklager 41, das Drehlager 47 und das Schublager 46. Wie in Figur 3 b gezeigt, ist der Hebel zweiteilig ausgebildet und umfasst ein oberes Hebelelement 42 a und ein unteres Hebelelement 42 b. Das obere und das untere Hebelelement 42 a, b sind über das Drehlager 47 miteinander verbunden, welches durch den Kettenbahnträger 5 hindurch verläuft. Durch die beidseitige Anordnung relativ zum Kettenbahnträger 5, d.h. durch das obere und untere Hebelelement 42 a, b werden Torsionsmomente auf den Kettenbahnträger 5 reduziert bzw. vermieden. Die Schubstange 43 a ist als Vierkantprofil ausgebildet. An der Ober- und Unterseite weist sie Aufnahmen für das Schublager 46 des jeweiligen Hebelelements 42 a, b auf. Am gegenüberliegenden Ende des Hebels 42 ist das Auslenklager 41 angeordnet. Das Auslenklager 41 ist mit einem Gleitstein 41' verbunden. Das Auslenklager 41 umfasst einen Bolzen am Hebel 42, welcher in einer Gleitbuchse im Gleitstein 41' gelagert ist. Der Gleitstein 41` greift in eine Längsführung 41" im Steuerschienenelement 40 a ein. Die Längsführung 41" ist in z-Richtung ausgebildet, so dass der Gleitstein 41' innerhalb der Längsführung 41" sich in z-Richtung bewegen lässt. An den Kettenbahnträger 5 ist die Führungsschiene 8 angeschweißt bzw. angeschraubt.

Der Hebel 42 ist als exzentrischer Kipphebel ausgebildet, d.h. die drei Lager sind nicht auf einer Geraden angeordnet. Vielmehr ist das Drehlager 47 bzw. die Drehachse 47` außerhalb der Verbindungslinie zwischen Auslenklager 41 und Schublager 46 angeordnet. Darüber hinaus ist der Abstand zwischen Drehlager 47 und Auslenklager 41 geringer als der Abstand zwischen Drehlager 47 und Schublager 46. Durch die Übersetzung des Hebels sowie die Kröpfung des Kipphebels ist die Kinematik der Verstelleinrichtung veränderbar. Durch die Kraftumlenkung um 90 Grad, welche durch den Hebel 42 erfolgt, kann der Antrieb samt Schubstange 43, Spindel 44 und Elektromotor 45 platzsparend entlang der Innenseite des Kettenbahnträgers 5 angeordnet werden.

Durch die Ausbildung als exzentrischer Kipphebel ist die Kraft auf das Schublager 46 proportional zum Weg, wohingegen die Auslenkkraft auf das Auslenklager 41 aufgrund der Geometrie der Kette exponentiell mit zunehmender Auslenkung steigt. Dies beruht auf der Geometrie der Kette, welche bei Auslenkung der Steuerschiene 44 in eine Zick-Zack-Position überführt wird. Zudem ist die Kraftübersetzung durch das Hebelverhältnis am Hebel 42 definiert und konstruktiv veränderbar.

Figur 4 zeigt die Kinematik eines Hebels 42. Der Hebel 42 ist schematisch durch die Drehachse 47`, das Auslenklager 41 sowie das Schublager 46 dargestellt. Das Schublager 46 und das Auslenklager 41 führen beide eine Drehbewegung aus und liegen auf einer Kreisbahn um die Drehachse 47`. Der exzentrische Kipphebel ist in drei Positionen dargestellt, wobei Position 1, die minimale Auslenkung, Position 2 den Totpunkt des Kipphebels und Position 3 die maximale Auslenkung der Steuerschiene darstellen. Die beiden Positionen 1 und 3 sind symmetrisch zum Totpunkt, d.h. der Position 2 angeordnet. Am Schublager 46 greift die Schubstange 43 an, und das Auslenklager 41 ist mit dem Gleitstein 41' verbunden.

Figur 5 zeigt eine Draufsicht auf den Auslassständer 6, auf welchem das Antriebskettenrad 3 und der Kettenspanner 60 angeordnet sind. Die Kluppenkette 2 läuft aus dem Reckbereich 10 in das Antriebskettenrad 3 ein. Das Antriebskettenrad 3 wird von einem nicht gezeigten Antrieb, insbesondere einem Elektromotor, angetrieben. Durch das Antriebskettenrad 3 wird die gesamte umlaufende Kluppenkette 2 angetrieben. Die Kluppenkette 2 verlässt das Antriebskettenrad 3 und gelangt unmittelbar in den Kettenspanner 60. Der Kettenspanner 60 umfasst eine Kettenführung 61. Die Kluppenkette 2 ist vorzugsweise in der Kettenführung 61 über eine Führungsschiene 8 geführt. Die Kettenführung 61 umfasst hier eine gebogene Führungsschiene 8, von welcher die Kluppenkette umgelenkt wird.

Die Kluppenkette 2 verlässt den Kettenspanner 60 und wird in den Rückführbereich 30 weiterbefördert. Der Kettenspanner 60 ist unmittelbar nach dem Antriebskettenrad 3 und vor dem Rückführbereich 30 angeordnet. Der Kettenspanner 60 bzw. die Kettenführung 61 des Kettenspanners 60 ist in x-Richtung beweglich auf dem Auslassständer 6 befestigt.

Wie in Figur 6 gezeigt, sind unterhalb der Kettenführung 61 Linearführungen 63 angeordnet, auf welchen die Kettenführung 61 in x-Richtung beweglich angeordnet ist. Der Kettenspanner 60 umfasst in der hier gezeigten Ausführungsform ferner einen Pneumatikzylinder 62. Der Pneumatikzylinder 62 ist in x-Richtung angeordnet und derart ausgebildet, dass er die Kettenführung 61 in x-Richtung verschiebt. Bei Betätigung des Pneumatikzylinders 62 wird die gesamte Kettenführung 61 auf den Linearführungen 63 parallel verschoben. Bei dem Pneumatikzylinder 62 handelt es sich um einen kraftbetätigten Antrieb, welcher die Kettenführung 61 nach außen hin, d.h. von dem Antriebsrad 3 weg, vorspannt. Dadurch wird die Kluppenkette 2 unter Spannung gehalten. Durch die Anordnung des Kettenspanners 60 unmittelbar hinter dem Antriebsrad 3 kann die Kraft, welche durch den Kettenspanner 60 aufzubringen ist, deutlich reduziert werden. Unmittelbar hinter dem Antriebskettenrad 3 ist die Kluppenkette 2 praktisch kraftfrei, da eine Kette systembedingt lediglich auf Zug belastbar ist. Somit genügt es in der Regel, dass der Pneumatikzylinder 62 mit geringem pneumatischen Druck, vorzugsweise im einstelligen bar-Bereich, beaufschlagt wird. Außerdem kann der Kettenspanner 60 in Betrieb in einem vorher definierten Arbeitsbereich gehalten werden, und bei Überschreiten von Schwellwerten wird die Kette über die erste bzw. zweite Steuerschiene 20, 40 verkürzt oder verlängert, so dass der Kettenspanner 60 weiterhin im bevorzugten Arbeitsbereich verbleibt. Durch die nach außen gerichtete Vorspannkraft des Kettenspanners 60 wird die Kluppenkette 2 durch Änderung ihres Umlaufwegs unter Spannung gehalten. Die Vorspannung ist über die Druckbeaufschlagung des Pneumatikzylindes 62 in einfacher Art und Weise einstellbar bzw. veränderbar.

### Bezugszeichenliste

- 1: Folienreckanlage
- 2: Kluppenkette
- 3: Antriebskettenrad
- 4: Mittelachse
- 5: Kettenbahnträger
- 6: Auslassständer
- 8: Führungsschiene
- 9: Folie
- 10: Reckbereich
- 11: Querreckbereich
- 12: Längsschrumpfbereich
- 13: Einlauf des Reckbereichs
- 20: erste Steuerschiene
- 30: Rückführbereich
- 40: zweite Steuerschiene
- 40 a, b: Steuerschienenelement
- 41: Auslenklager
- 41': Gleitstein
- 41": Längsführung
- 42: Hebel
- 42 a, b: oberes und unteres Hebelelement
- 43 a, b: Schubstange
- 44: Spindel
- 45: Elektromotor
- 45`: Getriebegehäuse
- 46: Schublager
- 47: Drehlager
- 47': Drehachse
- 48: Querführung
- 49: Linearführung
- 50: Auflaufelement
- 51: erstes Drehgelenk
- 52: erste Pendellagerung
- 53: Auslaufelement
- 54: zweites Drehgelenk
- 55: zweite Pendellagerung
- 56: Tellerfederpaket
- 60: Kettenspanner
- 61: Kettenführung
- 62: Pneumatikzylinder
- 63: Linearführung
- U: Umlaufrichtung

## Patentansprüche

1. Folienreckanlage (1) mit zwei jeweils durch einen Reckbereich (10) und einen Rückführbereich (30) umlaufenden Kluppenketten (2), welche über eine Auslenkung einer ersten (20) und einer zweiten Steuerschiene (40) einstellbar sind, wobei die erste Steuerschiene (20) für einen Längsschrumpf im Reckbereich (10) und die zweite Steuerschiene (40) für einen Rückschrumpf im Rückführbereich (30) angeordnet ist, wobei die Auslenkung der zweiten Steuerschiene (40) an zumindest zwei Auslenklagern (41) gemeinsam über eine Verstelleinrichtung mit einem einzigen Antrieb verstellbar ist.

2. Folienreckanlage (1) nach Anspruch 1, **dadurch gekennzeichnet, dass** die Verstelleinrichtung einen in einem Kettenbahnträger (5) gelagerten Hebel (42) aufweist, welcher an einem ersten Ende mit einem der Auslenklager (41) der zweiten Steuerschiene (40) und einem dem ersten Ende gegenüberliegenden zweiten Ende mit einer Schubstange (43 a, b) verbunden ist.

3. Folienreckanlage (1) nach Anspruch 2, **dadurch gekennzeichnet, dass** die Schubstange (43 a, b) über eine Spindel (44) vorzugsweise von einem Elektromotor (45) angetrieben wird.

4. Folienreckanlage (1) nach Anspruch 3, **dadurch gekennzeichnet, dass** die Spindel (44) eine durchgehende Spindel ist, welche an beiden Enden jeweils mit einer Schubstange (43 a, b) derart verbunden ist, dass sich die inneren Schubkräfte ausgleichen.

5. Folienreckanlage (1) nach einem der Ansprüche 2 bis 4, **dadurch gekennzeichnet, dass** der Antrieb in einer Querrichtung orthogonal zur Schubstangen- bzw. Spindellängsrichtung beweglich gelagert ist.

6. Folienreckanlage (1) nach einem der Ansprüche 2 bis 5, **dadurch gekennzeichnet, dass** der Hebel (42) als exzentrischer Kipphebel ausgebildet ist und vorzugsweise die von der Schubstange (43 a, b) eingebrachte Kraft progressiv auf die in das Auslenklager (41) für den Rückschrumpf aufgebrachte Kraft übersetzt ist.

7. Folienreckanlage (1) nach einem der Ansprüche 1 bis 6, **dadurch gekennzeichnet, dass** die zweite Steuerschiene (40) zumindest zwei Steuerschienenelemente (40 a, b) aufweist.

8. Folienreckanlage (1) nach Anspruch 7, **dadurch gekennzeichnet, dass** jedes Steuerschienenelement (40 a, b) zwei Auslenklager (41) umfasst, welche von den Enden des Steuerschienenelementes (40 a, b) beabstandet angeordnet sind.

9. Folienreckanlage (1) nach einem der Ansprüche 2 bis 8, **dadurch gekennzeichnet, dass** der Hebel (42) aus zwei Hebelelementen (42 a, b) besteht, welche durch eine durch den Kettenbahnträger (5) hindurchgehende Lagerung verbunden sind und insbesondere jeweils über einen Gleitstein (41') mit einem Auslenklager (41) in die Steuerschiene eingreifen.

10. Folienreckanlage (1) nach einem der vorhergehenden Ansprüche, wobei zwischen dem Reckbereich (10) und dem Rückführbereich (30) für jede Kluppenkette (2) ein Antriebskettenrad (3) und nachfolgend ein Kettenspanner (60) angeordnet sind.

11. Folienreckanlage (1) mit zwei jeweils durch einen Reckbereich (10) und einen Rückführbereich (30) umlaufenden Kluppenketten (2), bei welchen über eine Auslenkung einer ersten Steuerschiene (20) ein Längsschrumpf im Reckbereich (10) einstellbar ist, wobei zwischen dem Reckbereich (10) und dem Rückführbereich (30) für jede Kluppenkette (2) ein Antriebskettenrad (3) und nachfolgend ein Kettenspanner (60) angeordnet sind.

12. Folienreckanlage (1) nach Anspruch 10 oder 11, **dadurch gekennzeichnet, dass** das Antriebskettenrad (3) und der Kettenspanner (60) auf einem Auslassständer (6) montiert sind.

13. Folienreckanlage (1) nach einem der Ansprüche 10 bis 12, **dadurch gekennzeichnet, dass** der Kettenspanner (60) eine Kettenumlenkung umfasst, welche quer zur Kettenlaufrichtung zur Änderung des Kettenumlaufwegs in einem Arbeitsbereich, verschiebbar ist.

14. Folienreckanlage (1) nach Anspruch 13, **dadurch gekennzeichnet, dass** die Kettenumlenkung über einen kraftbetätigten Antrieb, insbesondere einen Pneumatikzylinder (62) verschiebbar ist.

15. Folienreckanlage (1) nach einem der Ansprüche 1 bis 10 und einem der Ansprüche 12 bis 14, bei welcher bei Überschreiten eines vordefinierten ersten Grenzwerts im Arbeitsbereich die Auslenkung der zweiten Steuerschiene (40) im Rückführbereich (30) derart verstellt wird, dass der Kettenspanner (60) in einen vordefinierten Sollbereich innerhalb des Arbeitsbereichs zurückkehrt.

16. Folienreckanlage (1) nach Anspruch 15, **dadurch gekennzeichnet, dass** bei Überschreiten eines vordefinierten zweiten Grenzwerts eine Verstellung der Auslenkung der ersten Steuerschiene (20) im Längsschrumpfbereich (12) gestoppt wird.

17. Folienreckanlage (1) nach Anspruch 15 oder 16, **dadurch gekennzeichnet, dass** bei Erreichen der Grenzen des Arbeitsbereichs die Folienreckanlage (1) gestoppt wird.

## Claims

1. A film stretching system (1) with two clip chains (2) each one running through a stretching area (10) and a return area (30), which are adjustable via a deflection of a first control rail (20) and a second control rail (40), wherein the first control rail (20) is arranged for a longitudinal shrinkage in the stretching region (10) and the second control rail (40) is arranged for a shrink-back in the return region (30), wherein the deflection of the second control rail (40) is jointly adjustable at at least two deflection bearings (41) via an adjusting device with a single drive.

2. The film stretching system (1) according to claim 1, **characterised in that** the adjusting device comprises a lever (42) which is mounted in a chain track section (5), the lever (42) being connected at a first end to one of the deflection bearings (41) of the second control rail (40) and at a second end opposite the first end to a push rod (43 a, b).

3. The film stretching system (1) according to claim 2, **characterised in that** the push rod (43 a, b) is preferably driven by an electric motor (45) via a spindle (44).

4. The film stretching system (1) according to claim 3, **characterised in that** the spindle (44) is a continuous spindle which is connected at both ends to a push rod (43 a, b) in such a way that the internal thrust forces balance each other out.

5. The film stretching system (1) according to one of claims 2 to 4, **characterised in that** the drive is mounted movably in a transverse direction orthogonal to the longitudinal direction of the push rod or spindle.

6. The film stretching system (1) according to one of claims 2 to 5, **characterised in that** the lever (42) is designed as an eccentric rocker arm and preferably the force applied by the push rod (43 a, b) is progressively transmitted to the force applied to the deflection bearing (41) for the shrink-back.

7. The film stretching system (1) according to one of claims 1 to 6, **characterised in that** the second control rail (40) comprises at least two control rail elements (40 a, b).

8. The film stretching system (1) according to claim 7, **characterised in that** each control rail element (40 a, b) comprises two deflection bearings (41) which are arranged at a distance from the ends of the control rail element (40 a, b).

9. The film stretching system (1) according to one of claims 2 to 8, **characterised in that** the lever (42) consists of two lever elements (42 a, b), which are connected by a bearing passing through the chain track section (5) and in particular each one engages with in the control rail via a sliding block (41') having a deflection bearing (41).

10. The film stretching system (1) according to one of the preceding claims, **characterised in that** a drive sprocket (3) and subsequently a chain tensioner (60) are arranged between the stretching region (10) and the return region (30) for each clip chain (2).

11. The film stretching system (1) with two clip chains (2) each one running through a stretching region (10) and a return region (30), which are adjustable via a deflection of a first control rail (20) in which a longitudinal shrinkage in the stretching region (10), wherein for each clip chain (2) a drive sprocket (3) and subsequently a chain tensioner (60) are arranged between the stretching region (10) and the return region (30).

12. The film stretching system (1) according to claim 10 or 11, **characterised in that** the drive sprocket (3) and the chain tensioner (60) are mounted on an outlet stand (6).

13. The film stretching system (1) according to one of claims 10 to 12, **characterised in that** the chain tensioner (60) comprises a chain deflection which can be displaced transversely to the chain running direction to change the chain circulation path in a working range.

14. The film stretching system (1) according to claim 13, **characterised in that** the chain deflection is displaceable via a power-operated drive, in particular a pneumatic cylinder (62).

15. The film stretching system (1) according to one of claims 1 to 10 and one of claims 12 to 14, in which, when a predefined first limit value in the working range is exceeded, the deflection of the second control rail (40) in the return region (30) is adjusted in such a way that the chain tensioner (60) returns to a predefined target range within the working range.

16. The film stretching system (1) according to claim 15, **characterised in that** when a predefined second limit value is exceeded, an adjustment of the deflection of the first control rail (20) in the longitudinal shrinkage region (12) is stopped.

17. The film stretching system (1) according to claim 15 or 16, **characterised in that** the film stretching system (1) is stopped when reaching the limits of the working range.

## Revendications

1. Installation d'étirage de film (1) avec deux chaînes à pinces (2) passant respectivement par une zone d'étirage (10) et une zone de retour (30), qui sont réglables par le biais d'une déviation d'un premier (20) et d'un deuxième rail de commande (40), le premier rail de commande (20) étant agencé pour un retrait longitudinal dans la zone d'étirage (10) et le deuxième rail de commande (40) étant agencé pour un retrait de retour dans la zone de retour (30), la déviation du deuxième rail de commande (40) étant réglable en commun sur au moins deux paliers de déviation (41) par l'intermédiaire d'un dispositif de réglage avec un seul entraînement.

2. Installation d'étirage de film (1) selon la revendication 1, **caractérisée en ce que** le dispositif de réglage présente un levier (42) logé dans un support de voie de chaîne (5), lequel est relié à une première extrémité à l'un des paliers de déviation (41) du deuxième rail de commande (40) et à une deuxième extrémité opposée à la première extrémité à une tige de poussée (43a, b).

3. Installation d'étirage de film (1) selon la revendication 2, **caractérisée en ce que** la tige de poussée (43a, b) est entraînée par l'intermédiaire d'une broche (44), de préférence par un moteur électrique (45).

4. Installation d'étirage de film (1) selon la revendication 3, **caractérisée en ce que** la broche (44) est une broche continue qui est reliée aux deux extrémités respectivement à une tige de poussée (43a, b) de telle sorte que les forces de poussée internes s'équilibrent.

5. Installation d'étirage de film (1) selon l'une quelconque des revendications 2 à 4, **caractérisée en ce que** l'entraînement est logé de manière mobile dans une direction transversale orthogonale à la direction longitudinale de la tige de poussée ou de la broche.

6. Installation d'étirage de film (1) selon l'une quelconque des revendications 2 à 5, **caractérisée en ce que** le levier (42) est réalisé sous forme de levier basculant excentré et, de préférence, la force introduite par la tige de poussée (43a, b) est progressivement démultipliée en la force appliquée dans le palier de déviation (41) pour le retrait de retour.

7. Installation d'étirage de film (1) selon l'une quelconque des revendications 1 à 6, **caractérisée en ce que** le deuxième rail de commande (40) présente au moins deux éléments de rail de commande (40a, b).

8. Installation d'étirage de film (1) selon la revendication 7, **caractérisée en ce que** chaque élément de rail de commande (40a, b) comprend deux paliers de déviation (41) qui sont agencés à distance des extrémités de l'élément de rail de commande (40a, b).

9. Installation d'étirage de film (1) selon l'une quelconque des revendications 2 à 8, **caractérisée en ce que** le levier (42) est constitué de deux éléments de levier (42a, b) qui sont reliés par un palier traversant le support de voie de chaîne (5) et qui s'engagent dans le rail de commande notamment respectivement par l'intermédiaire d'un coulisseau (41') avec un palier de déviation (41).

10. Installation d'étirage de film (1) selon l'une quelconque des revendications précédentes, dans laquelle une roue à chaîne d'entraînement (3) et ensuite un tendeur de chaîne (60) sont agencés entre la zone d'étirage (10) et la zone de retour (30) pour chaque chaîne à pinces (2).

11. Installation d'étirage de film (1) avec deux chaînes à pinces (2) passant respectivement par une zone d'étirage (10) et une zone de retour (30), pour lesquelles un retrait longitudinal dans la zone d'étirage (10) peut être réglé par l'intermédiaire d'une déviation d'un premier rail de commande (20), une roue à chaîne d'entraînement (3) et ensuite un tendeur de chaîne (60) étant agencés entre la zone d'étirage (10) et la zone de retour (30) pour chaque chaîne à pinces (2).

12. Installation d'étirage de film (1) selon la revendication 10 ou 11, **caractérisée en ce que** la roue à chaîne d'entraînement (3) et le tendeur de chaîne (60) sont montés sur un support de sortie (6).

13. Installation d'étirage de film (1) selon l'une quelconque des revendications 10 à 12, **caractérisée en ce que** le tendeur de chaîne (60) comprend un renvoi de chaîne qui peut être déplacé transversalement à la direction de marche de la chaîne pour modifier la course de la chaîne dans une zone de travail.

14. Installation d'étirage de film (1) selon la revendication 13, **caractérisée en ce que** le renvoi de chaîne peut être déplacé par l'intermédiaire d'un entraînement actionné par force, notamment d'un cylindre pneumatique (62).

15. Installation d'étirage de film (1) selon l'une quelconque des revendications 1 à 10 et l'une quelconque des revendications 12 à 14, pour laquelle, en cas de dépassement d'une première valeur limite prédéfinie dans la zone de travail, la déviation du deuxième rail de commande (40) dans la zone de retour (30) est réglée de telle sorte que le tendeur de chaîne (60) revienne dans une zone de consigne prédéfinie à l'intérieur de la zone de travail.

16. Installation d'étirage de film (1) selon la revendication 15, **caractérisée en ce qu'**en cas de dépassement d'une deuxième valeur limite prédéfinie, un réglage de la déviation du premier rail de commande (20) est arrêté dans la zone de retrait longitudinal (12).

17. Installation d'étirage de film (1) selon la revendication 15 ou 16, **caractérisée en ce que** lorsque les limites de la zone de travail sont atteintes, l'installation d'étirage de film (1) est arrêtée.
